# EUROPEAN PATENT SPECIFICATION

(11) **EP 2 744 704 B1**
(45) Date of publication and mention of the grant of the patent: **26.06.2019**
(21) Application number: 12753563.1
(22) Date of filing: 07.08.2012
(51) Int. Cl.: B63B 22/00, B63B 22/18

(54) **COMMUNICATION BUOY AND METHOD OF DEPLOYMENT**
KOMMUNIKATIONSBOJE UND EINSATZVERFAHREN DAFÜR
BOUÉE DE COMMUNICATION ET PROCÉDÉ DE DÉPLOIEMENT

(30) Priority: 18.08.2011 GB 201114233
(43) Date of publication of application: 25.06.2014
(73) Proprietor: Atlas Elektronik UK Limited, Dorchester Dorset DT2 8ZB (GB)
(72) Inventor: POINTER, Stephen, Dorchester DT2 8ZB (GB); PURNELL, Daryl, Dorchester DT2 8ZB (GB); Galliver, Wesley John, Dorchester DT2 8ZB (GB); Moncur, Stephen George, Dorchester DT2 8ZB (GB)
(74) Representative: HGF Limited
(86) International application number: PCT/GB2012/051913
(87) International publication number: WO 2013/024258

(56) References cited:
- EP-A1- 0 449 371
- GB-A- 2 339 172
- US-A- 4 794 575
- US-A- 6 058 874
- US-A- 6 164 179
- "New buoys enable submerged subs to communicate", Physorg.com, 13 July 2010 (2010-07-13), XP055045614, Retrieved from the Internet: URL:http://phys.org/news198219967.html [retrieved on 2012-11-26]
- DRISCOLL F R ET AL: "Development and Testing of an A-Sized Rapidly Deployable Navigation and Communication GATEWAY Buoy", OCEANS, 2005. PROCEEDINGS OF MTS/IEEE WASHINGTON, DC, USA 18-23 SEPT. 2005, PISCATAWAY, NJ, USA,IEEE, PISCATAWAY, NJ, USA, 18 September 2005 (2005-09-18), pages 1-8, XP010920875, DOI: 10.1109/OCEANS.2005.1639924 ISBN: 978-0-933957-34-3

## Description

This invention relates to a communication buoy, and a method of deployment thereof, to provide communications with a submerged vehicle or installation.

### BACKGROUND

Tethered or towed systems for providing RF communication with submerged vehicles are known. RF communication from shallowly submerged vehicles is also known. However, these know methods of communication entail inconvenient geographical and depth limitations on such communications.

Sonarbuoys deployed from aircraft or surface ships are also well-known for deploying passive or active sonar transducers below the sea surface. For example, GB 2339172 discloses a sonobuoy deployable from an aircraft. The sonobuoy has an inflatable float, an antenna, a depth control cord for lowering a transducer to predetermined depths, a deployable drogue to resist motion of subsea currents and tides by supplying drag in vertical and horizontal directions and a sonar unit arranged within a canister. On detection of immersion the float is inflated from a gas bottle. The lower portion of the canister separates and descends, unreeling a cable and the float and upper portion remain floating. A compliant portion of the cable stretches and pulls the drogue and sonar unit from the canister, the drogue deploys and the canister is jettisoned. The compliant portion of the cable also resists motion of subsea currents and tides.

US 2009/0067289 discloses an apparatus, particularly a buoy, deployable from a surface ship or aircraft, the buoy having communications equipment to communicate with an above-surface vessel, including a ship, aircraft or satellite, and having a sonar transducer for communicating with an unmanned or manned underwater vehicle, using sonar signals. The buoy includes a fluid-tight container, and antenna and a transducer array and may be a known sonobuoy. The watertight container may contain the communications equipment and a ballast mechanism for adjusting the depth of the buoy. The buoy may be deployed from a ship, aircraft or drone and multiple buoys may be used.

An acoustic to radio frequency (A2RF) buoy is also known which is launched from a submarine's trash disposal unit (TDU) which is located on the underside of a submarine. The buoy is placed into a TDU kit enclosure and an assembly of the buoy and ballast weights ejected. The assembly is weighted so that the buoy drops clear of the sub. At a predetermined time or depth the ballast weights are jettisoned. The A2RF buoy becomes buoyant and ascends to the surface. At the surface the TDU kit enclosure falls away and a float is inflated. The A2RF has the ability to communicate on UHF or with Iridium and GPS satellites with antennas above the water so the buoy can communicate with aircraft, shore stations or other surface ships. An acoustic assembly with hydrophones and a projector array for two way acoustic communications with the submarine drops down below the buoy. The submarine can communicate with the buoy with its sonar. Because the A2RF buoy is free floating, there is no wake, which makes the buoy difficult to detect. However, not all submarines have a TDU from which a buoy can be deployed.

US 4,794,575 discloses a buoy launched from a submarine via an aft signal ejector, whereon the buoy buoyantly ascends to the surface, remaining tethered to the submarine to transmit sea surface information back to the submarine. The device comprises a multi-chambered, buoyant cylindrical metal shell including a long data downlink with spooling means and a buoyant lifting body which flies the data wire away from the launching platform. The buoy conforms to the physical size constraints and operational characteristics of existing signal ejector launched devices and, for example, the buoy is a similar size as, and is launched in the same manner as, submarine expendable bathythermographs that are used to measure a sound velocity profile of deep ocean waters. The buoy has a first hermetically sealed chamber in an upper portion of the buoy and a second chamber hermetically sealed by a spool of datalink cable held in place at depth by seawater pressure. Upon ejection, a lifting portion remains connected by a datalink cable to the submarine and a remaining portion rises to the surface, unspooling the datalink cable from the lifting portion and from the buoyant ascending portion. At the surface, a reduction in seawater pressure allows the spool to fall away flooding the second chamber with seawater to deploy a weight suspended below the floating buoy. The first hermetically sealed chamber is provided with dissolvable plugs which, after approximately 5-10 minutes immersion in seawater, dissolve allowing the first chamber to flood and the buoy to be scuttled upon the datalink also being cut.

There remains a requirement for a means readily and rapidly deployable from a submerged vehicle or installation, in particular a submarine, for providing two-way global voice and data communications to and from the submerged vehicle or installation, without impeding manoeuvrability or operation of the submarine.

### BRIEF SUMMARY OF THE DISCLOSURE

In accordance with a first aspect of the present invention there is provided a buoy for providing communications between an underwater craft or installation and remote radio communication apparatus, the buoy comprising: a surface module comprising radio communication apparatus, the surface module being hermetically sealed to a submergible module comprising acoustic communication apparatus, the buoy being configured such that the buoy is capable of ascending to the water surface under the buoyancy of the buoy including the hermetically sealed surface module and submergible module when launched from the underwater craft or installation in use; flotation means for deployment from the buoy at the water surface; control means; and separation means arranged to separate the surface module from the submergible module under control of the control means at least partially to flood the submergible module to cause the submergible module to become negatively buoyant so that the submergible module descends to a predetermined depth on an umbilical communication cable mechanically and operably linking the surface module to the submergible module.

Conveniently, the buoy is launchable with a centre of mass of the buoy substantially above a centre of buoyancy so that the buoy is arranged to right itself after launch until the centre of mass is substantially vertically below the centre of buoyancy during ascent of the buoy.

Conveniently, the control means is arranged to trigger deployment of the flotation means after a first predetermined time from the buoy being launched.

Advantageously, the flotation means comprises a flotation bag arranged to erect at least one antenna.

Advantageously, the at least one antenna comprises a radio communications antenna and a GPS antenna.

Conveniently, the radio communication apparatus comprises GPS apparatus to obtain a GPS fix.

Advantageously, the control means is arranged to trigger separation of the surface module from the submergible module after obtaining the GPS fix.

Alternatively, the control means is arranged to separate the surface module from the submergible module after a second predetermined time from deploying the flotation means.

Advantageously, the buoy is arranged to deploy from the submergible module: a first portion of umbilical communication cable connected between the surface module and cable dampening means; the cable dampening means; and a second portion of the umbilical communication cable connected between the cable dampening means and the submergible module.

Conveniently, the cable dampening means comprises drogue means and compliant linking means mechanically linking the first portion of umbilical communication cable to the second portion of umbilical communication cable for substantially uncoupling at least one of horizontal and vertical motion of the deployed surface module from the deployed submergible module.

Advantageously, a portion of the umbilical communication cable is coiled around the compliant linking means.

Conveniently, the submergible module comprises spool means arranged to de-spool the second portion of the umbilical communication cable from the spool means.

Advantageously, the compliant linking means is arranged to decelerate the submergible module when the second portion of umbilical communication cable is deployed to a predetermined depth.

Conveniently, the submergible module comprises a ring transducer for transmitting and receiving acoustic communications.

According to a second aspect of the invention, there is provided a method of providing communications between an underwater craft or installation and remote radio communication apparatus comprising: launching, from the underwater craft or installation, a buoy comprising a surface module comprising radio communication apparatus, the surface module being hermetically sealed to a submergible module comprising acoustic communications means such that the buoy ascends to the water surface under its own buoyancy; deploying flotation means from the buoy at the water surface; initialising the radio communication apparatus; separating the surface module from the submergible module at least partially to flood the submergible module to make the submergible module negatively buoyant and lowering the submergible module to a predetermined depth on an umbilical communication cable mechanically and operably linking the surface module to the submergible module; and initialising the acoustic communications means.

Conveniently, the buoy is launched with a centre of mass of the buoy substantially above a centre of buoyancy so that buoy rights itself after launch until the centre of mass is substantially vertically below the centre of buoyancy during ascent of the buoy.

Advantageously, the method comprises deploying the flotation means after a first predetermined time from launching the buoy.

Conveniently, deploying the flotation means comprises deploying flotation bag means which erects at least one antenna.

Conveniently, erecting at least one antenna comprises erecting a radio communications antenna and a GPS antenna.

Advantageously, initialising the radio communication apparatus further comprises obtaining a GPS fix.

Conveniently the method comprises separating the surface module from the submergible module only after obtaining the GPS fix.

Alternatively, the method comprises separating the surface module from the submergible module after a second predetermined time from deploying the flotation means.

Advantageously, lowering the submergible module to a predetermined depth on an umbilical communication cable comprises deploying from the submergible module: a first portion of umbilical communication cable connected between the surface module and cable dampening means; the cable dampening means; and a second portion of the umbilical communication cable connected between the cable dampening means and the submergible module.

Conveniently, the cable dampening means comprises drogue means and compliant linking means mechanically linking the first portion of umbilical communication cable to the second portion of umbilical communication cable for substantially uncoupling at least one of horizontal and vertical motion of the surface module from the deployed submergible module.

Conveniently, a portion of the umbilical communication cable is coiled around the compliant linking means.

Conveniently, the submergible module comprises spool means and deploying the second portion of umbilical communication cable comprises de-spooling the second portion from the spool means.

Advantageously, the compliant linking means decelerates the submergible module when the second portion of umbilical communication cable is deployed to a predetermined depth.

Conveniently, the method comprises transmitting and receiving acoustic communications using a ring acoustic transducer of the submergible module.

### BRIEF DESCRIPTION OF THE DRAWINGS

Embodiments of the invention are further described hereinafter with reference to the accompanying drawings, in which:
Figure 1 is a schematic diagram of a communication system using the buoy of the present invention;
Figure 2 is an external perspective view of the buoy of the present invention before deployment;
Figure 3 is a schematic drawing of the buoy of Figure 2 as deployed;
Figure 4 is a perspective exploded view of the buoy of Figure 3, showing an RF communications portion, a central spool portion and an acoustic communication portion;
Figure 5 is a partially cut-away perspective drawing of the central spool portion of Figure 4;
Figure 6 is an exploded perspective view of a bulkhead and associated components located between the central spool portion and the RF communications portion of Figure 4;
Figure 7 is a perspective view of the assembled bulkhead of Figure 6;
Figure 8 is a vertical cross-section of the bulkhead of Figure 6;
Figure 9 is a partially cut-away perspective drawing of a surface RF communications portion and flotation bag of the buoy of Figure 4; and

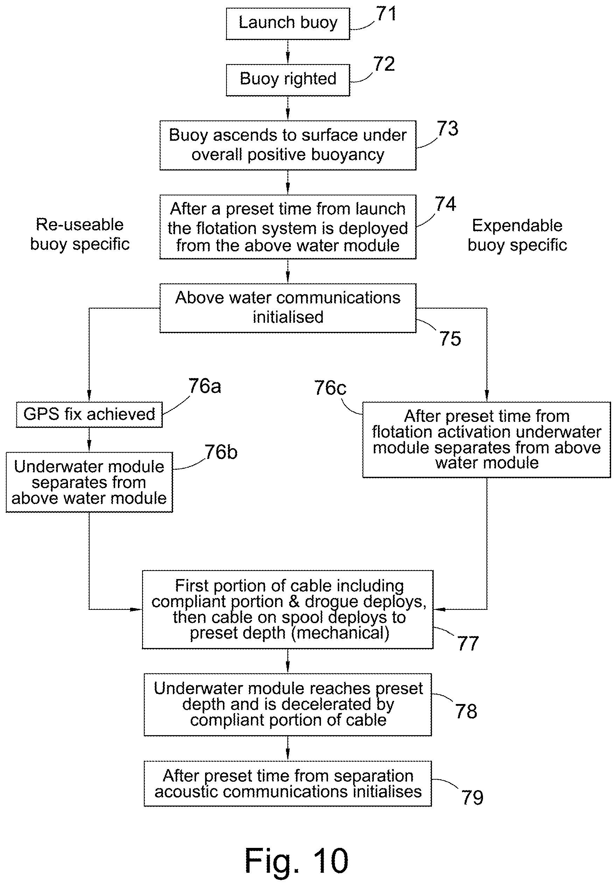

Figure 10 is a flowchart of a method of deploying the buoy of the invention.

### DETAILED DESCRIPTION

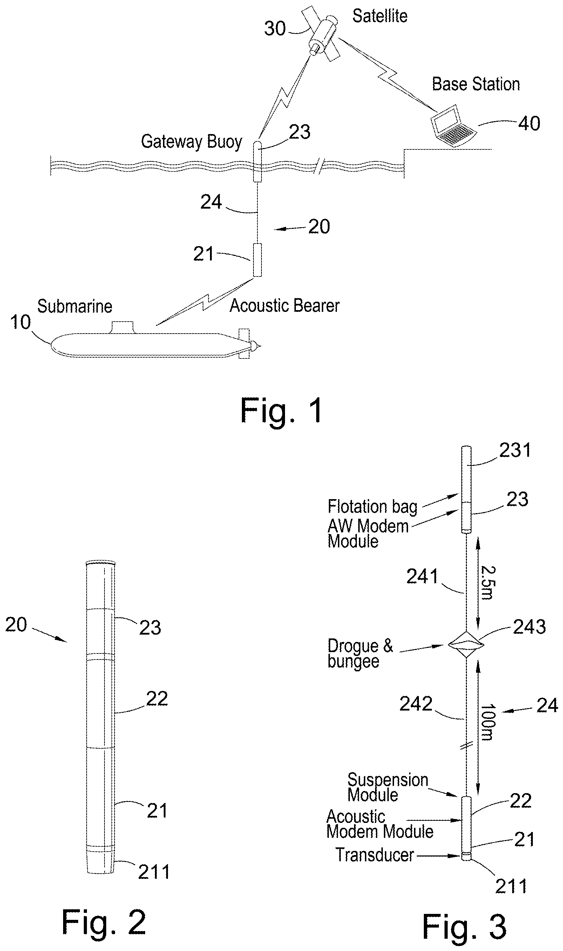

Referring to Figure 1, a communication buoy 20 according to the invention provides underwater communication between a submerged acoustic communications module 21 of the buoy and a submerged vehicle or installation such as a submarine 10. The submerged acoustic module 21 is connected by an umbilical communication cable 24 to a floating surface module 23 of the buoy 20 which provides RF communication with a base station 40 for example via a communication satellite 30. Conveniently the submerged acoustic module 21 comprises an acoustic transducer 211 for communicating with the submerged vehicle 10 or installation acoustically. A ring transducer has been found to be suitable but other forms of transducer may alternatively be used.

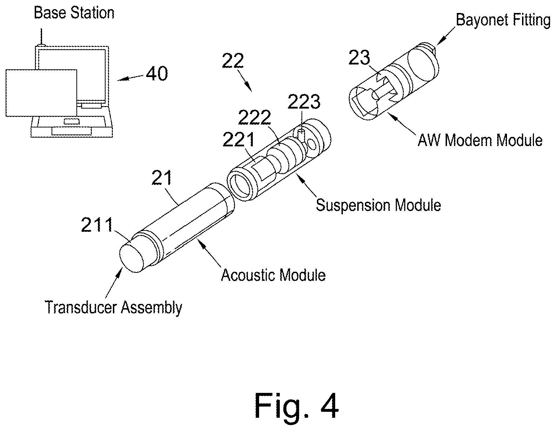

Referring to Figure 2, in which the buoy 20 is illustrated before deployment, and Figure 4 showing an exploded view, the buoy is cylindrical comprising three equal radius cylindrical portions arranged before deployment on a common longitudinal axis. A first cylindrical acoustic portion 21, negatively buoyant in seawater and submerged below the water surface in use, comprises, for example, an acoustic transducer 211 and modem for communication between the buoy and a submerged vehicle or installation similarly equipped with a cooperating acoustic transducer and modem.

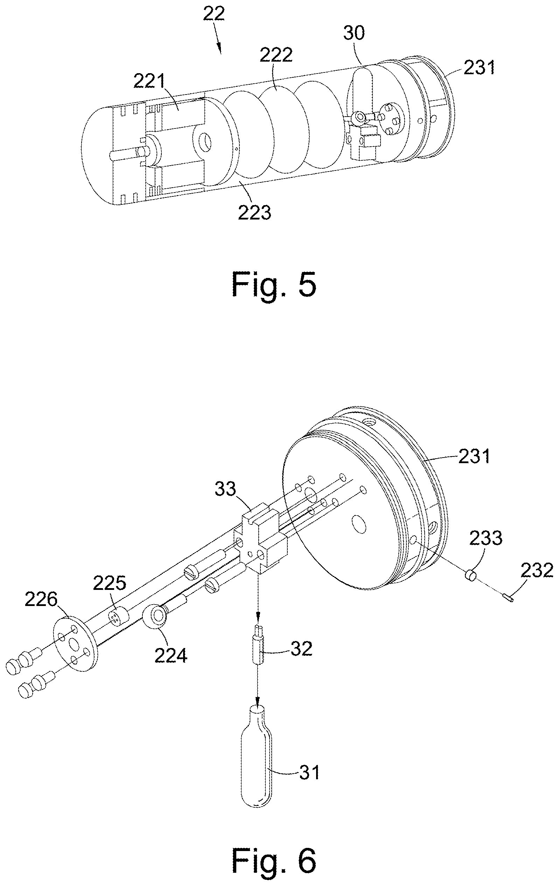

Referring to Figures 4 and 5, a second cylindrical spool portion 22 comprises a spool assembly 221 for stowing the umbilical communication cable 24 before deployment and a cable damper 222 housed within a cylindrical tube 223. The cylindrical spool is joined to a RF portion 23 by a bulkhead 231. Referring to Figure 6, the bulkhead 231 is joined to the cylindrical tube 223 by at least one radial shear pin 232 housed within a shear pin insert 233. Located on a face of the bulkhead there is further provided a communication cable anchor 224 and a communication cable gland 225 and gland cover 226 to provide an entrance to a passage for the communication cable through the bulkhead 231.

The spool section 22 also contains, located on the bulkhead 231, a release mechanism 30 for releasing the cylindrical tube 223 from the bulkhead 231 thereby separating the spool portion 22 from the RF portion 23. The release mechanism 30 comprises a compressed gas cylinder 31, a protractor 32 for piecing the compressed gas cylinder 31 and a gas manifold 33. On piecing the compressed gas cylinder pressure within the spool portion acting on the bulkhead increases sufficiently to shear the at least one shear pin 232, separating the spool portion 22 from the RF communications portion 23.

As described below, the cable damper 222 comprises a compliant portion of the communication cable and a drogue 243. The second, central spool portion 22, is positively buoyant in seawater in the un-separated buoy. Communicating voids in the central spool portion may be occupied by gas, such as air, to provide the required buoyancy, but at least partial evacuation of the voids is alternatively envisaged. The submergible module of the buoy comprises the first cylindrical portion and the second cylindrical portion.

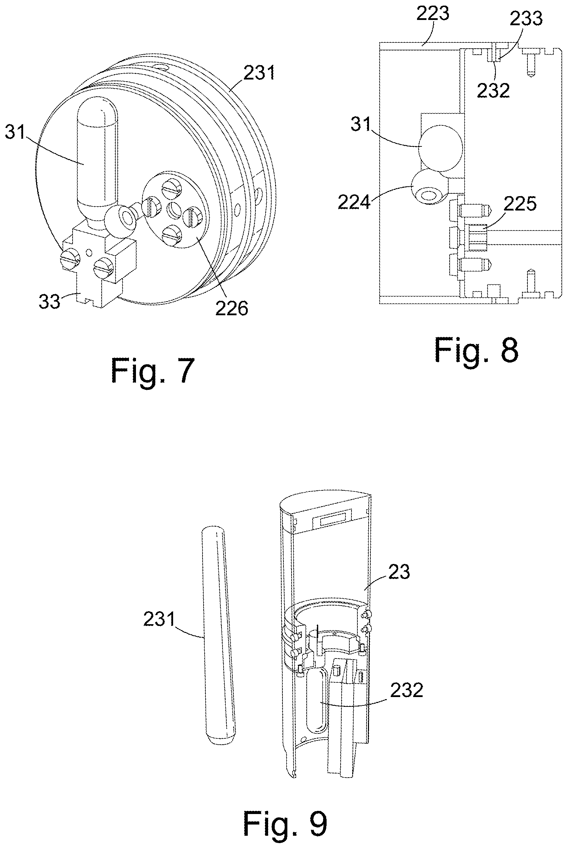

Referring to Figures 4 and 9, a third RF portion 23, arranged to float at the water surface in use as a surface module, comprises a hermetically sealed chamber housing an RF modem and transceiver, a battery pack for powering the buoy, a GPS unit and a chamber housing the un-deployed flotation system 231.

The cylindrical portions of the buoy are conveniently housed in aluminium tubes with Acetol bulkheads and sealed together using o-rings. The separate cylindrical portions allow reconfiguration of the buoy so that the communications systems can be customised for specific applications without affecting the second cylindrical spool portion.

In the illustrated embodiment the buoy may be launched from a submarine submerged signal ejector with a 100 mm internal diameter with which submarines are typically equipped for emergency use. In this embodiment, the buoy 20 of the invention preferably has an external diameter of substantially 100 mm and an axial length of less than 1000 mm, to form a sliding fit in the signal ejector. It will be understood that the buoy may have a different external diameter to provide a sliding fit with an ejector with a different internal diameter.

In use a submarine 10 launches the buoy 20 and then remains within acoustic communication range of the buoy to send or receive communications.

Referring also to the flowchart of Figure 7, the buoy is ejected 71 from an upper surface, for example from a submerged signal ejector, of the submarine with the buoy inverted, i.e. with the acoustic module 21 uppermost. Launching the buoy with the heaviest part of the buoy foremost minimizes cartwheeling of the buoy immediately after launch. The positive buoyancy of at least the central spool module 22 and the negative buoyancy of the acoustic module 21 create a turning moment to right 72 the un-separated buoy 20. That is, the buoy is ejected with the centre of mass above the centre of buoyancy and rights itself after launch so that the buoy is in rotational equilibrium with the centre of mass substantially vertically below the centre of buoyancy during ascent of the buoy to the water surface.

The complete un-separated buoy is just sufficiently positively buoyant in seawater that on deployment the complete buoy ascends 73 to the water surface sufficiently slowly not to cause the buoy dramatically to breach the water surface. The fact that the un-separated buoy is itself buoyant in seawater in the described embodiment provides the advantage of obviating any requirement to inflate any buoyancy aids at depth and subsequently to vent buoyancy gas during or after the ascent, which might otherwise betray the presence of the buoy. The RF and acoustic communications equipment in the buoy may be powered up as the buoy ascends.

All deployment events after launch are triggered by an onboard microcontroller located in the RF module 23 which provides timed triggered events obviating a requirement for sensors. The timing of these timed events may be set prior to launch dependent on a depth from which the buoy is launched. However, it will be understood that sensors could alternatively be used.

After a preset time, on or after reaching the water surface, the RF module deploys 74 a floatation system and surface GPS and communications antennae from the RF module. For example, a cylindrical airbag 231 is deployed to envelop the antennae with the dual function of providing buoyancy to the separated buoy and supporting and protecting the antennae. A cylindrical polyurethane bag inflated from a carbon dioxide canister 232 which is punctured by a protractor arrangement has been found to be suitable. The inflated airbag resembles a spar style buoy with a small surface cross-section. It will be understood that instead of using a timer, one or more sensors could be used to determine when the buoy was on the surface.

The RF communications apparatus is then initialised 75.

Referring also to Figures 6 to 8, after the deployment of the flotation system, the RF surface module 23 is separated 76c from the submergible module 21, 22 by piercing the compressed gas cylinder 31 thereby shearing the at least one shear pin 232 retaining the tube 223 of the spool portion on the bulkhead 231, thereby allowing the spool portion 22 to flood with seawater and become negatively buoyant so that the submergible spool portion 22 and acoustic portion 21, forming the submergible module, sink away together from the RF surface module 23. This separation may be delayed until the surface module has detected 76a a GPS signal. This is particularly advantageous where the buoy is recoverable if no GPS signal is detected. As the spool portion 22 and acoustic portion 21 descend together, a first portion 241 of umbilical communication cable 24 operably and mechanically connected at a first end to the RF module 23 is deployed from the spool portion 22 followed by a drogue 243 which deploys on becoming free from the spool portion. A remaining portion 242 of umbilical communication cable 24, longer than the first portion 241, but with an effective length dependent on the depth of the submarine from which the buoy was launched, is then unspooled from the spool module 22. The first portion 241 of the umbilical communication cable 24 may be, for example, 2.5 m long and the second portion 242 of the umbilical communication cable 100 m long.

The first portion 241 of the umbilical communication cable has a compliant potion, not shown, which, after deployment, decouples sea surface motion of the RF module 23 from the submerged acoustic and spool modules 21, 22 and also decelerates 78 the submerged acoustic and spool modules at the end of the descent without damage to the lightweight umbilical communication cable 24. The compliant portion may comprise a resiliently extendible link about which a portion of the umbilical communication cable 24 is coiled. As indicated above, the compliant portion and the drogue 243 together form the cable damper 222.

The acoustic communications apparatus is then initialised 79.

The umbilical communication cable 24 is a single core cable, saving weight and space when stowed, compared with a twin core cable, while being sufficiently strong to tether the RF module 23 to the second and third modules 22, 21. When deployed in salt water, a return signal path is provided through the surrounding electrically conductive salt water.

A combined transducer and modem power amplifier assembly is used to simplify mounting in the acoustic module 21. A bulkhead is used to attach the acoustic transducer to the body of the buoy and to provide thermal management of the acoustic modem power amplifier.

The use of low earth orbit satellite communications, for example the Iridium satellite system, for above water communications provides global coverage.

The described gateway buoy has the advantage that is can be deployed from a moving submarine or other undersea vehicle and does not subsequently hamper manoeuvrability or unduly restrict an operating depth of the undersea vehicle.

Although an embodiment of the buoy suitable for deployment from a submerged signal ejector of a submarine has been described, it will be understood that the buoy, with suitable repackaging if necessary, could instead be deployed from a surface craft or an airborne vehicle or platform, with suitable settings of the deployment timings.

Although described as providing communications with a vehicle or installation launching the buoy, it will be understood that the buoy could instead, or as well, provide communications with a different underwater vehicle or installation from the vehicle or installation which launched the buoy. This is a further advantage over a tethered buoy in which communications are passed only through the tether connecting the launched buoy to the launch vehicle.

Although an embodiment has been described using RF communications, it will be understood that wireless communications at other frequencies, for example optical frequencies, may be used.

In addition to two-way communications, the buoy may also provide GPS and status data to the submarine, allowing a crew to make effective operational use of the system. Other applications include emergency communication and indicator buoys, environmental assessment, surveillance and submarine paging.

Following use, the buoy may be scuttled to sink to the seabed and erase its volatile memory. The buoy may be scuttled either on depletion of its battery or on command. Alternatively, the buoy may be recoverable and reusable.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.
The reader's attention is directed to all papers and documents which are filed concurrently with or previous to this specification in connection with this application and which are open to public inspection with this specification.

## Claims

1. A buoy (20) for providing communications between an underwater craft or installation (10) and remote radio communication apparatus (40), the buoy **characterised by**:
a surface module (23) comprising radio communication apparatus, the surface module being hermetically sealed to a submergible module (21) comprising acoustic communication apparatus, the buoy being configured such that the buoy is capable of ascending to the water surface under the buoyancy of the buoy including the hermetically sealed surface module and submergible module when launched from the underwater craft or installation in use;
flotation means (231) for deployment from the buoy at the water surface;
control means; and
separation means (232) arranged to separate the surface module from the submergible module under control of the control means at least partially to flood the submergible module to cause the submergible module to become negatively buoyant so that the submergible module descends to a predetermined depth on an umbilical communication cable (24) mechanically and operably linking the surface module to the submergible module.

2. A buoy as claimed in claim 1, wherein the buoy is launchable with a centre of mass of the buoy substantially above a centre of buoyancy so that the buoy is arranged to right itself after launch until the centre of mass is substantially vertically below the centre of buoyancy during ascent of the buoy.

3. A buoy as claimed in claims 1 or 2, wherein the control means is arranged to trigger deployment of the flotation means (231) after a first predetermined time from the buoy being launched and optionally the flotation means comprises a flotation bag arranged to erect at least one antenna.

4. A buoy as claimed in claim 3, wherein the at least one antenna comprises a radio communications antenna and a GPS antenna and the radio communication apparatus comprises GPS apparatus to obtain a GPS fix and optionally the control means is arranged to trigger separation of the surface module from the submergible module after obtaining the GPS fix.

5. A buoy as claimed in any of the preceding claims, wherein the control means is arranged to separate the surface module from the submergible module after a second predetermined time from deploying the flotation means.

6. A buoy as claimed in any of the preceding claims, arranged to deploy from the submergible module:
a first portion (241) of umbilical communication cable connected between the surface module (23) and cable dampening means;
the cable dampening means (243); and
a second portion (242) of the umbilical communication cable connected between the cable dampening means and the submergible module (22); optionally
wherein the cable dampening means comprises drogue means and compliant linking means mechanically linking the first portion of umbilical communication cable to the second portion of umbilical communication cable for substantially uncoupling at least one of horizontal and vertical motion of the deployed surface module from the deployed submergible module; optionally,
wherein a portion of the umbilical communication cable is coiled around the compliant linking means; optionally,
wherein the submergible module comprises spool means arranged to de-spool the second portion of the umbilical communication cable from the spool means; optionally,
wherein the compliant linking means is arranged to decelerate the submergible module when the second portion of umbilical communication cable is deployed to a predetermined depth.

7. A buoy as claimed in any of the preceding claims, wherein the submergible module comprises a ring transducer (211) for transmitting and receiving acoustic communications.

8. A method of providing communications between an underwater craft or installation (10) and remote radio communication apparatus (40) comprising:
launching (71), from the underwater craft or installation, a buoy (20) comprising a surface module (23) comprising radio communication apparatus, the surface module being hermetically sealed to a submergible module (21) comprising acoustic communications means such that the buoy ascends to the water surface under its own buoyancy;
deploying (74) flotation means (231) from the buoy at the water surface;
initialising (75) the radio communication apparatus;
separating (76b; 76c) the surface module from the submergible module at least partially to flood the submergible module to make the submergible module negatively buoyant and lowering the submergible module to a predetermined depth on an umbilical communication cable (24) mechanically and operably linking the surface module to the submergible module; and
initialising (79) the acoustic communications means.

9. A method as claimed in claim 8, wherein the buoy is launched with a centre of mass of the buoy substantially above a centre of buoyancy so that buoy rights itself (72) after launch with the centre of mass substantially vertically below the centre of buoyancy during ascent of the buoy.

10. A method as claimed in claims 8 or 9, comprising deploying the flotation means after a first predetermined time from launching the buoy.

11. A method as claimed in any of claims 8 to 10, wherein deploying the flotation means comprises deploying flotation bag means which erects at least one antenna; optionally,
wherein erecting at least one antenna comprises erecting a radio communications antenna and a GPS antenna; optionally,
wherein initialising the radio communication apparatus further comprises obtaining a GPS fix; optionally,
comprising separating the surface module from the submergible module only after obtaining the GPS fix.

12. A method as claimed in any of claims 8 to 11, comprising separating (76c) the surface module from the submergible module after a second predetermined time from deploying the flotation means.

13. A method as claimed in any of claims 8 to 12, wherein lowering the submergible module to a predetermined depth on an umbilical communication cable comprises deploying (77) from the submergible module:
a first portion (241) of umbilical communication cable connected between the surface module and cable dampening means;
the cable dampening means (243); and
a second portion (242) of the umbilical communication cable connected between the cable dampening means and the submergible module; optionally,
wherein the cable dampening means comprises drogue means and compliant linking means mechanically linking the first portion of umbilical communication cable to the second portion of umbilical communication cable for substantially uncoupling at least one of horizontal and vertical motion of the surface module from the deployed submergible module; optionally,
wherein a portion of the umbilical communication cable is coiled around the compliant linking means; optionally,
wherein the compliant linking means decelerates the submergible module when the second portion of umbilical communication cable is deployed to a predetermined depth.

14. A method as claimed in claim 13, wherein the submergible module comprises spool means and deploying the second portion of umbilical communication cable comprises de-spooling the second portion from the spool means.

15. A method as claimed in any of claims 8 to 14 comprising transmitting and receiving acoustic communications using a ring acoustic transducer of the submergible module.

## Patentansprüche

1. Boje (20) zum Bereitstellen von Kommunikationen zwischen einem Unterwasserfahrzeug oder einer Unterwasserinstallation (10) und einer entfernten Funkkommunikationsvorrichtung (40), wobei die Boje **gekennzeichnet ist durch**:
ein Oberflächenmodul (23), das eine Funkkommunikationsvorrichtung umfasst, wobei das Oberflächenmodul hermetisch mit einem tauchfähigen Modul (21) abgedichtet ist, welches eine akustische Kommunikationsvorrichtung umfasst, wobei die Boje so gestaltet ist, dass die Boje, wenn sie im Einsatz von dem Unterwasserfahrzeug oder der Unterwasserinstallation gestartet wird, in der Lage ist, **durch** die Auftriebskraft der Boje zur Wasseroberfläche aufzutauchen, wobei die Boje dabei das hermetisch abgedichtete Oberflächenmodul und das tauchfähige Modul aufweist;
eine Schwimmeinrichtung (231) zur Dislozierung von der Boje auf der Wasseroberfläche;
ein Steuermittel; und
ein Trennmittel (232), das so angeordnet ist, dass es das Oberflächenmodul unter der Steuerung des Steuermittels von dem tauchfähigen Modul wenigstens teilweise trennt, um das tauchfähige Modul zu fluten, um zu bewirken, dass das tauchfähige Modul negativen Auftrieb erfährt, so dass das tauchfähige Modul bis auf eine vorbestimmte Tiefe an einem Versorgungskommunikationskabel (24) sinkt, das mechanisch und funktionsfähig das Oberflächenmodul mit dem tauchfähigen Modul verbindet.

2. Boje nach Anspruch 1, wobei die Boje mit einem Masseschwerpunkt der Boje, der im Wesentlichen über der Mitte der Boje liegt, gestartet werden kann, so dass die Boje so angeordnet ist, dass sie sich nach dem Start selbst aufrichtet, bis der Masseschwerpunkt während dem Auftauchen der Boje im Wesentlichen vertikal unterhalb des Auftriebsmittelpunkts liegt.

3. Boje nach Anspruch 1 oder 2, wobei das Steuermittel so angeordnet ist, dass es die Dislozierung der Schwimmeinrichtung (231) nach einem ersten vorbestimmten Zeitraum nach dem Starten der Boje auslöst, und wobei die Schwimmeinrichtung optional einen Schwimmbeutel umfasst, der so angeordnet ist, dass er mindestens eine Antenne aufrichtet.

4. Boje nach Anspruch 3, wobei die mindestens eine Antenne eine Funkkommunikationsantenne und eine GPS-Antenne umfasst, und wobei die Funkkommunikationsvorrichtung eine GPS-Vorrichtung umfasst, um eine GPS-Standortbestimmung zu erhalten, und wobei das Steuermittel optional so angeordnet ist, um das Trennen des Oberflächenmoduls von dem tauchfähigen Modul nach Erhalt der GPS-Standortbestimmung auszulösen.

5. Boje nach einem der vorstehenden Ansprüche, wobei das Steuermittel so angeordnet ist, dass es nach einem zweiten vorbestimmten Zeitraum ab der Dislozierung der Schwimmeinrichtung das Oberflächenmodul von dem tauchfähigen Modul trennt.

6. Boje nach einem der vorstehenden Ansprüche, wobei diese so angeordnet ist, dass sie von dem tauchfähigen Modul folgendes disloziert:
einen ersten Teil (241) des Versorgungskommunikationskabels, der zwischen dem Oberflächenmodul (23) und einem Kabeldämpfungsmittel verbunden ist;
das Kabeldämpfungsmittel (243); und
einen zweiten Teil (242) des Versorgungskommunikationskabels, der zwischen dem Kabeldämpfungsmittel und dem tauchfähigen Modul (22) verbunden ist;
wobei optional das Kabeldämpfungsmittel ein Schleppankermittel und ein elastisches Verbindungsmittel umfasst, das den ersten Teil des Versorgungskommunikationskabels mechanisch mit dem zweiten Teil des Versorgungskommunikationskabels verbindet, um wenigstens die horizontale oder die vertikale Bewegung des dislozierten Oberflächenmoduls von dem dislozierten tauchfähigen Modul im Wesentlichen zu entkoppeln;
wobei optional ein Teil des Versorgungskommunikationskabels um das elastische Verbindungsmittel gewickelt ist;
wobei optional das tauchfähige Modul ein Spulenmittel umfasst, das so angeordnet ist, dass es den zweiten Teil des Versorgungskommunikationskabels von dem Spulenmittel abwickelt;
wobei das elastische Verbindungsmittel optional so angeordnet ist, dass es das tauchfähige Modul abbremst, wenn der zweite Teil des Versorgungskommunikationskabels bis auf eine vorbestimmte Tiefe disloziert ist.

7. Boje nach einem der vorstehenden Ansprüche, wobei das tauchfähige Modul einen Ringmesswandler (211) zur Übermittlung und zum Empfang akustischer Kommunikationen umfasst.

8. Verfahren zum Bereitstellen von Kommunikationen zwischen einem Unterwasserfahrzeug oder einer Unterwasserinstallation (10) und einer entfernten Funkkommunikationsvorrichtung (40), wobei das Verfahren folgendes umfasst:
von dem Unterwasserfahrzeug oder der Unterwasserinstallation, Starten (71) einer Boje (20), die ein Oberflächenmodul (23) umfasst, das eine Funkkommunikationsvorrichtung umfasst, wobei das Oberflächenmodul hermetisch mit einem tauchfähigen Modul (21) abgedichtet ist, welches eine akustische Kommunikationsvorrichtung umfasst, so dass die Boje durch ihre eigene Auftriebskraft zur Wasseroberfläche auftaucht;
Dislozieren (74) einer eine Schwimmeinrichtung (231) von der Boje auf der Wasseroberfläche;
Initialisieren (75) der Funkkommunikationsvorrichtung;
wenigstens teilweises Trennen (76b; 76c) des Oberflächenmodus von dem tauchfähigen Modul, um zu bewirken, dass das tauchfähige Modul negativen Auftrieb erfährt, und Senken des tauchfähigen Moduls bis auf eine vorbestimmte Tiefe an einem Versorgungskommunikationskabel (24), das mechanisch und funktionsfähig das Oberflächenmodul mit dem tauchfähigen Modul verbindet; und
Initialisieren (79) der akustischen Kommunikationseinrichtung.

9. Verfahren nach Anspruch 8, wobei die Boje mit einem Masseschwerpunkt der Boje, der im Wesentlichen über der Mitte der Boje liegt, gestartet werden kann, so dass die Boje so angeordnet ist, dass sie sich nach dem Start selbst aufrichtet (72), wobei sich der Masseschwerpunkt während dem Auftauchen der Boje im Wesentlichen vertikal unterhalb des Auftriebsmittelpunkts liegt.

10. Verfahren nach Anspruch 8 oder 9, wobei dieses das Dislozieren der Schwimmeinrichtung nach einem ersten vorbestimmten Zeitraum nach dem Starten der Boje umfasst.

11. Verfahren nach einem der Ansprüche 8 bis 10, wobei das Dislozieren der Schwimmeinrichtung das Dislozieren eines Schwimmbeutelmittels umfasst, das wenigstens eine Antenne aufrichtet;
wobei optional das Aufrichten der wenigstens einen Antenne das Aufrichten einer Funkkommunikationsantenne und einer GPS-Antenne umfasst;
wobei optional das Initialisieren der Funkkommunikationsvorrichtung ferner das Erhalten einer GPS-Standortbestimmung umfasst;
optional umfassend das Trennen des Oberflächenmoduls von dem tauchfähigen Modul ausschließlich nach dem Erhalten der GPS-Standortbestimmung.

12. Verfahren nach einem der Ansprüche 8 bis 11, wobei dieses das Trennen (76c) des Oberflächenmoduls von dem tauchfähigen Modul nach einem zweiten vorbestimmten Zeitraum nach dem Dislozieren der Schwimmeinrichtung umfasst.

13. Verfahren nach einem der Ansprüche 8 bis 12, wobei das Senken des tauchfähigen Moduls auf eine vorbestimmte Tiefe an dem Versorgungskommunikationskabel das Dislozieren (77) von folgendem von dem tauchfähigen Modul umfasst:
einem ersten Teil (241) des Versorgungskommunikationskabels, der zwischen dem Oberflächenmodul und einem Kabeldämpfungsmittel verbunden ist;
des Kabeldämpfungsmittels (243); und
einem zweiten Teil (242) des Versorgungskommunikationskabels, der zwischen dem Kabeldämpfungsmittel und dem tauchfähigen Modul verbunden ist;
wobei optional das Kabeldämpfungsmittel ein Schleppankermittel und ein elastisches Verbindungsmittel umfasst, das den ersten Teil des Versorgungskommunikationskabels mechanisch mit dem zweiten Teil des Versorgungskommunikationskabels verbindet, um wenigstens die horizontale oder die vertikale Bewegung des dislozierten Oberflächenmoduls von dem dislozierten tauchfähigen Modul im Wesentlichen zu entkoppeln;
wobei optional ein Teil des Versorgungskommunikationskabels um das elastische Verbindungsmittel gewickelt ist;
wobei das elastische Verbindungsmittel optional das tauchfähige Modul abbremst, wenn der zweite Teil des Versorgungskommunikationskabels bis auf eine vorbestimmte Tiefe disloziert ist.

14. Verfahren nach Anspruch 13, wobei das tauchfähige Modul ein Spulenmittel umfasst, und wobei das Dislozieren des zweiten Teils des Versorgungskommunikationskabels das Abwickeln des zweiten Teils von dem Spulenmittel umfasst.

15. Verfahren nach einem der Ansprüche 8 bis 14, wobei dieses das Übermitteln und Empfangen akustischer Kommunikationen unter Verwendung eines akustischen Ringmesswandlers des tauchfähigen Moduls umfasst.

## Revendications

1. Bouée (20) permettant d'établir des communications entre une embarcation ou une installation sous-marine (10) et un appareil de communication radio à distance (40), la bouée étant **caractérisée par** :
un module de surface (23) comprenant un appareil de communication radio, le module de surface étant scellé hermétiquement à un module submersible (21) comprenant un appareil de communication acoustique, la bouée étant conçue de sorte que la bouée puisse monter à la surface de l'eau sous la flottabilité de la bouée, y compris le module de surface hermétiquement scellé et le module submersible lorsqu'il est lancé depuis l'embarcation ou l'installation sous-marine lors de l'utilisation ;
un moyen de flottaison (231) destiné à se déployer à partir de la bouée à la surface de l'eau ;
un moyen de commande ; et
un moyen de séparation (232) conçu pour séparer le module de surface du module submersible sous la commande du moyen de commande afin d'inonder au moins partiellement le module submersible pour amener le module submersible à produire une flottabilité négative de sorte que le module submersible descende à une profondeur prédéfinie sur un câble de communication ombilical (24) reliant mécaniquement et fonctionnellement le module de surface au module submersible.

2. Bouée selon la revendication 1, la bouée pouvant être lancée avec un centre de masse de la bouée sensiblement au-dessus d'un centre de flottabilité de sorte que la bouée soit conçue pour se redresser après le lancement jusqu'à ce que le centre de masse soit sensiblement verticalement au-dessous du centre de flottabilité pendant la montée de la bouée.

3. Bouée selon la revendication 1 ou 2, le moyen de commande étant conçu pour déclencher le déploiement du moyen de flottaison (231) après un premier délai prédéfini à partir du lancement de la bouée et le moyen de flottaison comprenant éventuellement un sac de flottaison conçu pour ériger au moins une antenne.

4. Bouée selon la revendication 3, l'au moins une antenne comprenant une antenne de radiocommunication et une antenne GPS et l'appareil de radiocommunication comprenant un appareil GPS pour obtenir une position GPS et éventuellement le moyen de commande étant conçu pour déclencher la séparation du module de surface du module submersible après avoir obtenu la position GPS.

5. Bouée selon l'une quelconque des revendications précédentes, le moyen de commande étant conçu pour séparer le module de surface du module submersible après un second délai prédéfini à partir du déploiement du moyen de flottaison.

6. Bouée selon l'une quelconque des revendications précédentes, conçue pour déployer à partir du module submersible :
une première partie (241) d'un câble de communication ombilical connectée entre le module de surface (23) et un moyen d'amortissement de câble ;
le moyen d'amortissement de câble (243) ; et
une seconde partie (242) du câble de communication ombilical connectée entre le moyen d'amortissement de câble et le module submersible (22) ; éventuellement
le moyen d'amortissement de câble comprenant un moyen stationnaire et un moyen de liaison élastique reliant mécaniquement la première partie du câble de communication ombilical à la seconde partie du câble de communication ombilical pour désaccoupler sensiblement au moins un des mouvements horizontal et vertical du module de surface déployé du module submersible déployé ; éventuellement,
une partie du câble de communication ombilical étant enroulée autour du moyen de liaison élastique ; éventuellement,
le module submersible comprenant un moyen de bobine conçu pour séparer la seconde partie du câble de communication ombilical du moyen de bobine ; éventuellement,
le moyen de liaison élastique étant conçu pour ralentir le module submersible lorsque la seconde partie du câble de communication ombilical est déployée à une profondeur prédéfinie.

7. Bouée selon l'une quelconque des revendications précédentes, le module submersible comprenant un transducteur annulaire (211) pour transmettre et recevoir des communications acoustiques.

8. Procédé permettant d'établir des communications entre une embarcation ou une installation sous-marine (10) et un appareil de radiocommunication à distance (40) comprenant les étapes consistant à :
lancer (71), à partir de l'embarcation ou de l'installation sous-marine, une bouée (20) comprenant un module de surface (23) comprenant un appareil de radiocommunication, le module de surface étant hermétiquement scellé à un module submersible (21) comprenant un moyen de communication acoustique de sorte que la bouée monte à la surface de l'eau sous sa propre poussée ;
déployer (74) un moyen de flottaison (231) à partir de la bouée à la surface de l'eau ;
initialiser (75) l'appareil de radiocommunication ;
séparer (76b ; 76c) le module de surface du module submersible au moins partiellement pour inonder le module submersible pour amener le module submersible à produire une flottabilité négative et abaisser le module submersible à une profondeur prédéfinie sur un câble ombilical (24) reliant mécaniquement et fonctionnellement le module de surface au module submersible ; et
initialiser (79) le moyen de communication acoustique.

9. Procédé selon la revendication 8, la bouée étant lancée avec un centre de masse de la bouée sensiblement au-dessus d'un centre de flottabilité de sorte que la bouée se redresse (72) après le lancement avec le centre de masse sensiblement verticalement au-dessous du centre de flottabilité pendant la montée de la bouée.

10. Procédé selon la revendication 8 ou 9, comprenant l'étape consistant à déployer le moyen de flottaison après un premier délai prédéfini à partir du lancement de la bouée.

11. Procédé selon l'une quelconque des revendications 8 à 10, le déploiement du moyen de flottaison comprenant l'étape consistant à déployer un moyen de sac de flottaison qui érige au moins une antenne ; éventuellement,
l'érection d'au moins une antenne comprenant l'étape consistant à ériger une antenne de radiocommunication et une antenne GPS ; éventuellement,
l'initialisation de l'appareil de radiocommunication comprenant en outre l'étape consistant à obtenir une position GPS ; éventuellement,
comprenant l'étape consistant à séparer le module de surface du module submersible seulement après avoir obtenu la position GPS.

12. Procédé selon l'une quelconque des revendications 8 à 11, comprenant l'étape consistant à séparer (76c) le module de surface du module submersible après un second délai prédéfini à partir du déploiement du moyen de flottaison.

13. Procédé selon l'une quelconque des revendications 8 à 12, l'abaissement du module submersible à une profondeur prédéfinie sur un câble de communication ombilical, comprenant l'étape consistant à déployer (77) à partir du module submersible :
une première partie (241) d'un câble de communication ombilical connectée entre le module de surface et un moyen d'amortissement de câble ;
le moyen d'amortissement de câble (243) ; et
une seconde partie (242) du câble de communication ombilical connectée entre le moyen d'amortissement de câble et le module submersible ; éventuellement,
le moyen d'amortissement de câble comprenant un moyen stationnaire et un moyen de liaison élastique reliant mécaniquement la première partie du câble de communication ombilical à la seconde partie du câble de communication ombilical pour désaccoupler sensiblement au moins un des mouvements horizontal et vertical du module de surface du module submersible déployé ; éventuellement,
une partie du câble de communication ombilical étant enroulée autour du moyen de liaison élastique ; éventuellement,
le moyen de liaison élastique ralentissant le module submersible lorsque la seconde partie du câble de communication ombilical est déployée à une profondeur prédéfinie.

14. Procédé selon la revendication 13, le module submersible comprenant un moyen de bobine et le déploiement de la seconde partie du câble de communication ombilical comprenant l'étape consistant à désembobiner la seconde partie du moyen de bobine.

15. Procédé selon l'une quelconque des revendications 8 à 14, comprenant les étapes consistant à transmettre et recevoir des communications acoustiques à l'aide d'un transducteur acoustique en anneau du module submersible.
